# EUROPÄISCHE PATENTANMELDUNG

(11) **EP 4 523 804 A1**
(43) Veröffentlichungstag der Anmeldung: **19.03.2025**
(21) Anmeldenummer: 24198066.3
(22) Anmeldetag: 03.09.2024
(51) Int. Cl.: B08B 9/032, B08B 9/04, E03F 7/00, E03F 9/00

(54) **KANALREINIGUNGSSYSTEM**

(30) Priorität: 14.09.2023 DE 102023124806
(71) Anmelder: iPEK International GmbH, 87477 Sulzberg (DE)
(72) Erfinder: Nagel, Thomas, 6992 Hirschegg (AT); Guggemos, Florian, 87435 Kempten (DE)
(74) Vertreter: 2s-ip Schramm Schneider Bertagnoll Patent- und Rechtsanwälte Part mbB

(57) **Zusammenfassung**

Bereitgestellt wird ein Kanalreinigungssystem mit einer Spüldüse (10), die eine Kamera (31) und eine Datenverarbeitungseinheit (32) umfasst, wobei die Datenverarbeitungseinheit (32) angepasst ist, von der Kamera (31) aufgenommene Bilder des Kanalrohres (1) entgegenzunehmen, die entgegengenommenen Bilder zu analysieren, um einen Reinigungszustand des Kanalrohres (1) zu ermitteln, und basierend auf dem ermittelten Reinigungszustand ein Signal zu erzeugen und an eine Anzeigeeinheit (21) zu übertragen, wobei das Signal indikativ für den ermittelten Reinigungszustand ist, wobei die Anzeigeeinheit (21) angepasst ist basierend auf dem empfangenen Signal eine Visualisierung des empfangenen Signals an der Anzeigeeinheit (21) zu veranlassen. Bereit gestellt wird ferner ein entsprechend ausgestaltetes Verfahren.

## Beschreibung

### Gebiet der Erfindung

Die Erfindung betrifft ein Kanalreinigungssystem, umfassend eine Spüldüse, die mit einem Spülschlauch gekoppelt ist, wobei die Spüldüse ausgestaltet ist eine Reinigung des Kanalrohres durchzuführen, wenn die Spüldüse über den Spülschlauch mit einem Spülmedium beaufschlagt wird. Des Weiteren betrifft die Erfindung ein Verfahren zum Reinigen eines Kanals bzw. eines Kanalrohres.

### Hintergrund der Erfindung

Kanalsysteme, insbesondere Abwasserkanäle müssen in regelmäßigen Abständen oder bei Bedarf gereinigt werden. Hierfür werden sogenannte Spuldüsen in das zu reinigende Kanalrohr gebracht, die mit einem Spülmedium, etwa Wasser, beaufschlagt werden, vorzugsweise mit einem Überdruck. Derartige Spuldüsen können eine Kamera aufweisen, die während des Spülvorganges laufend oder in regelmäßigen Abständen Aufnahmen macht und diese in einem Speicher der Kamera speichert. Nach Abschluss eines Spülvorganges können die Aufnahmen von einer Bedienperson außerhalb des Kanals, etwa in einem Inspektionsfahrzeug, kontrolliert werden. Bei schlechter Reinigung muss der Spülvorgang nochmals durchgeführt werden. Hierbei ist aber nicht gewährleistet, dass nicht noch einer weiter Spülvorgang notwendig ist. Ein mehrfach durchzuführender Spülvorgang ist zeitaufwendiger und führt zudem zu einem erhöhten Verbrauch von Spülwasser und zu einem insgesamt höheren Energieverbrauch.

### Aufgabe der Erfindung

Aufgabe der vorliegenden Erfindung ist es daher, Lösungen bereitzustellen, mit denen eine effektivere Reinigung von Kanälen gewährleistet werden kann.

### Erfindungsgemäße Lösung

Gelöst wird diese Aufgabe mit einem Kanalreinigungssystem und einem Verfahren zum Reinigen von Kanälen gemäß den unabhängigen Ansprüchen. Vorteilhafte Ausgestaltungen der Erfindung sind in den jeweiligen abhängigen Ansprüchen angegeben.

Bereit gestellt wird demnach ein Kanalreinigungssystem, umfassend
- eine in einem Kanalrohr verfahrbare oder verschiebbare Spüldüse, die mit einem Spülschlauch gekoppelt ist, wobei die Spüldüse ausgestaltet ist eine Reinigung des Kanalrohres durchzuführen, wenn die Spüldüse über den Spülschlauch mit einem Spülmedium beaufschlagt wird, und
- eine Anzeigeeinheit mit einer Empfangseinheit,
wobei
- die Spüldüse eine Sendeeinheit, eine Kamera und eine Datenverarbeitungseinheit umfasst,
- die Datenverarbeitungseinheit mit der Kamera und mit der Sendeeinheit gekoppelt ist,
- die Sendeeinheit angepasst ist, eine Kommunikationsverbindung mit der Empfangseinheit der Anzeigeeinheit herzustellen,
- die Datenverarbeitungseinheit angepasst ist
   - von der Kamera aufgenommene Bilder des Kanalrohres entgegenzunehmen,
   - die entgegengenommenen Bilder zu analysieren, um einen Reinigungszustand des Kanalrohres zu ermitteln (bzw. angepasst ist einen Reinigungszustand zu ermitteln), und
   - basierend auf dem ermittelten Reinigungszustand ein Signal zu erzeugen und (das Signal) über die Sendeeinheit an die Empfangseinheit der Anzeigeeinheit zu übertragen, wobei das Signal indikativ für den ermittelten Reinigungszustand ist, und
- die Anzeigeeinheit angepasst ist basierend auf dem von der Empfangseinheit empfangenen Signal eine Visualisierung des empfangenen Signals an der Anzeigeeinheit zu veranlassen, wobei die Visualisierung des Signals den Reinigungszustand des Kanalrohres angibt.

Vorteilhaft ist es, wenn das Kanalreinigungssystem weiter eine Steuereinrichtung zum Steuern des Beaufschlagens der Spüldüse mit dem Spülmedium umfasst.

Die Datenverarbeitungseinheit kann eine künstliche Intelligenz, insbesondere ein künstliches neuronales Netz, umfassen, wobei die künstliche Intelligenz angelernt ist, in den entgegengenommenen Bildern den Reinigungszustand des Kanalrohres zu erkennen.

Die Kamera kann eine Videokamera sein.

Die Kommunikationsverbindung kann eine drahtlose Kommunikationsverbindung sein.

Der Reinigungszustand kann zwei Reinigungszustände, vorzugsweise drei Reinigungszustände umfassen, wobei das Signal indikativ für einen der beiden Reinigungszustände, vorzugsweise für einen der drei Reinigungszustände ist.

Die Visualisierung des empfangenen Signals an der Anzeigeeinheit kann ein Anzeigen einer Ampel an der Anzeigeeinheit umfassen, wobei jede Ampelfarbe einem Reinigungszustand zugeordnet ist.

Die Steuereinrichtung kann angepasst sein, das Beaufschlagen der Spüldüse mit dem Spülmedium in Abhängigkeit von dem erzeugten Signal zu steuern. In einer Ausgestaltung ist es möglich, dass die Steuereinrichtung das Beaufschlagen der Spüldüse steuert, ohne dass das erzeugt Signal an der Anzeigeeinheit visualisiert wird.

Die Spüldüse kann ferner eine Speichereinrichtung umfassen, die mit der Datenverarbeitungseinheit gekoppelt ist, wobei in der Speichereinrichtung die entgegengenommenen Bilder gespeichert werden.

Bereit gestellt wird ferner ein Verfahren zum Steuern einer in einem Kanalrohr verfahrbare oder verschiebbare Spüldüse, wobei die Spüldüse eine Sendeeinheit, eine Kamera und eine Datenverarbeitungseinheit umfasst, wobei
- die Kamera Bilder des Kanalrohres aufnimmt,
- die Datenverarbeitungseinheit
   - die von der Kamera aufgenommenen Bilder entgegennimmt,
   - die entgegengenommenen Bilder analysiert, um einen Reinigungszustand des Kanalrohres zu ermitteln,
   - basierend auf dem ermittelten Reinigungszustand ein Signal erzeugt und über die Sendeeinheit an eine Empfangseinheit überträgt, wobei das Signal indikativ für den ermittelten Reinigungszustand ist, und
- in Abhängigkeit von dem an der Empfangseinheit empfangenen Signal die Spüldüse gesteuert wird.

Vorteilhaft kann es sein, wenn basierend auf dem von der Empfangseinheit empfangenen Signal eine Visualisierung des empfangenen Signals an einer Anzeigeeinheit angezeigt wird, wobei die Visualisierung des Signals den Reinigungszustand des Kanalrohres angibt, wobei das Steuern der Spüldüse in Abhängigkeit von dem an der Empfangseinheit empfangenen Signal ein Steuern der Spüldüse in Abhängigkeit von der an der Anzeigeeinheit angezeigten Visualisierung umfasst.

Die Datenverarbeitungseinheit kann eine künstliche Intelligenz, insbesondere ein künstliches neuronales Netz, umfassen, wobei die künstliche Intelligenz angelernt ist, in den entgegengenommenen Bildern den Reinigungszustand des Kanalrohres zu erkennen.

Der Reinigungszustand kann zwei Reinigungszustände, vorzugsweise drei Reinigungszustände umfassen, wobei das Signal indikativ für einen der beiden Reinigungszustände, vorzugsweise für einen der drei Reinigungszustände ist, und wobei beim Visualisieren des empfangenen Signals an der Anzeigeeinheit eine Ampel an der Anzeigeeinheit angezeigt wird, wobei jede Ampelfarbe einem Reinigungszustand zugeordnet ist.

Mittels einer Steuereinrichtung kann das Beaufschlagen der Spüldüse mit einem Spülmedium gesteuert werden, insbesondere in Abhängigkeit von dem erzeugten Signal.

Die Spüldüse kann ferner eine Speichereinrichtung umfassen, die mit der Datenverarbeitungseinheit gekoppelt ist, wobei in der Speichereinrichtung die entgegengenommenen Bilder gespeichert werden.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein erfindungsgemäßes Kanalreinigungssystem mit einer im Kanal angeordneten Spüldüse;
- Fig. 2: eine Spüldüse in einer detaillierten Ansicht;
- Fig. 3: drei Beispiele von Reinigungszuständen während eines Spülvorganges mit dazugehörigen Ampeln, die an einer Anzeigeeinheit angezeigt werden; und
- Fig. 4: zwei weitere Beispiele von Reinigungszuständen während eines Spülvorganges mit einer alternativen Anzeige dazugehöriger Ampeln, die an einer Anzeigeeinheit angezeigt werden.

### Detaillierte Beschreibung der Erfindung

Die Erfindung ermöglicht es in vorteilhafter Weise mit einer Spüldüse einen Reinigungs- bzw. Spülvorgang in einem Kanal durchzuführen, wobei gewährleistet ist, dass der Reinigungs- bzw. Spülvorgang nicht erneut wiederholt werden muss, etwa aufgrund eines mangelhaften Reinigungsergebnisses.

An einer Anzeigeeinheit, die außerhalb des zu reinigenden Kanals angeordnet ist, beispielsweise in einem Kanalinspektionsfahrzeug, wird der aktuelle Reinigungszustand im Bereich der Spüldüse beispielsweise in Form einer Ampel (grün, gelb oder rot) visualisiert. Die Spüldüse kann so lange im aktuellen Kanalabschnitt verbleiben, bis die Ampel auf grün springt. Der Bediener der Spüldüse kann dann veranlassen, dass die Spüldüse weiter in den Kanal vorgeschoben oder aus dem Kanal herausgezogen wird. Springt die Ampel beim Vorschieben oder beim Hausziehen der Spüldüse auf gelb oder rot verbleibt die Spüldüse wieder so lange in diesem Kanalabschnitt, bis die Ampel wieder auf grün springt. Der Bediener der Spüldüse kann damit auf einfache Weise den gesamten Spülvorgang anhand der Ampel an der Anzeigeeinheit steuern. Zeigt die Ampel für den gesamten zu reinigenden Kanalabschnitt grün an, dann ist dieser Kanalabschnitt komplett gereinigt.

Eine Überprüfung des aktuellen Reinigungszustandes durch den Bediener könnte auch anhand eines Videobildes erfolgen, das von der Spüldüse an die Anzeigeeinheit übertragen wird. Dies erfordert allerdings eine sehr hohe Bandbreite, die bei Verwendung kabelloser Übertragungstechniken während eines Spülvorganges meist nicht zur Verfügung steht. Das Spülwasser kann zudem dazu führen, dass überhaupt keine oder nur temporär eine Übertragung eines Videosignals möglich ist. Eine kabelgebundene Übertragung des Videosignals wäre alternativ möglich - zusätzlich zum Spülschlauch müsste hier aber auch ein Datenkabel mitgeführt werden, das in der rauen Umgebung während eines Spülvorganges beschädigt werden kann oder den Spülvorgang an sich behindern kann.

Da erfindungsgemäß an der Anzeigeeinheit nur eine Ampel angezeigt wird, kann auf eine Übertragung von Bilddaten aus dem Kanal während des Reinigungsvorganges verzichtet werden. Der Bediener erhält dennoch eine ausreichende Information über den aktuellen Reinigungszustand. Für die Übertragung eines Signals, das indikativ für den aktuellen Reinigungszustand ist, reichen sehr geringe Datenmengen aus, die kabellos von der Spüldüse an die Anzeigeeinheit übertagen werden können. Wird eine Ampel verwendet, die nur zwei Zustände visualisieren soll (grün = gereinigt und rot = nicht gereinigt) reicht ein Bit als Informationsträger aus. Versuche haben gezeigt, dass eine ausreichend stabile kabellose Datenübertragung dieser geringen Datenmengen auch während eines Spülvorganges in extrem rauen Umgebungen möglich ist. Hohe Latenzen oder hohe Signallaufzeiten können wegen des trägen Reinigungsvorganges vernachlässigt werden.

Erfindungsgemäß ist es vorgesehen, dass das Signal, das indikativ für den aktuellen Reinigungszustand ist, aus Bilddaten abgeleitet wird, die von einer Kamera der Spüldüse bereitgestellt werden. Auch hier kann vorteilhafterweise auf die Übertragung von Bilddaten an die Anzeigeeinrichtung verzichtet werden, da die Ableitung des Signals aus den Bilddaten von einer Datenverarbeitungseinheit der Spüldüse vorgenommen wird.

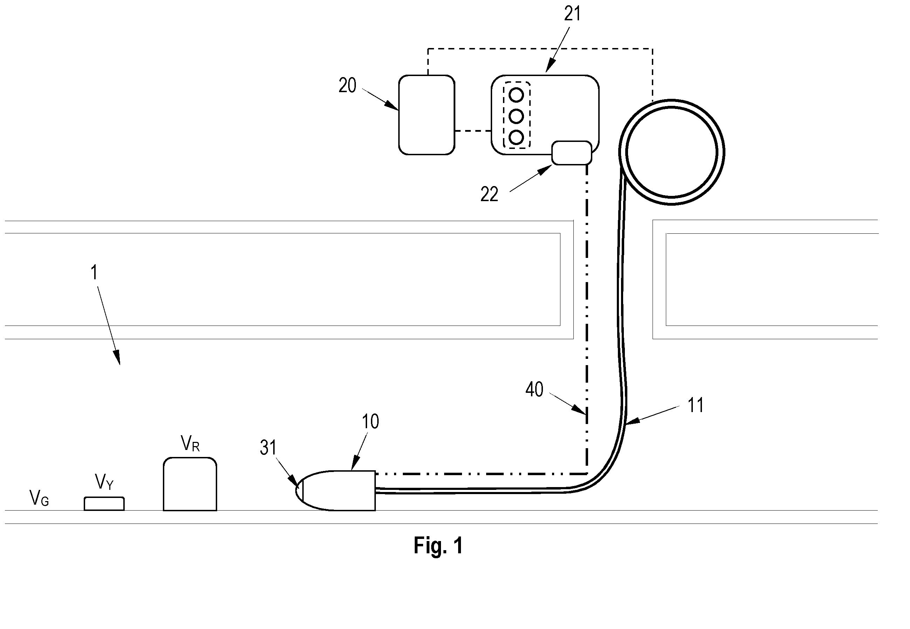

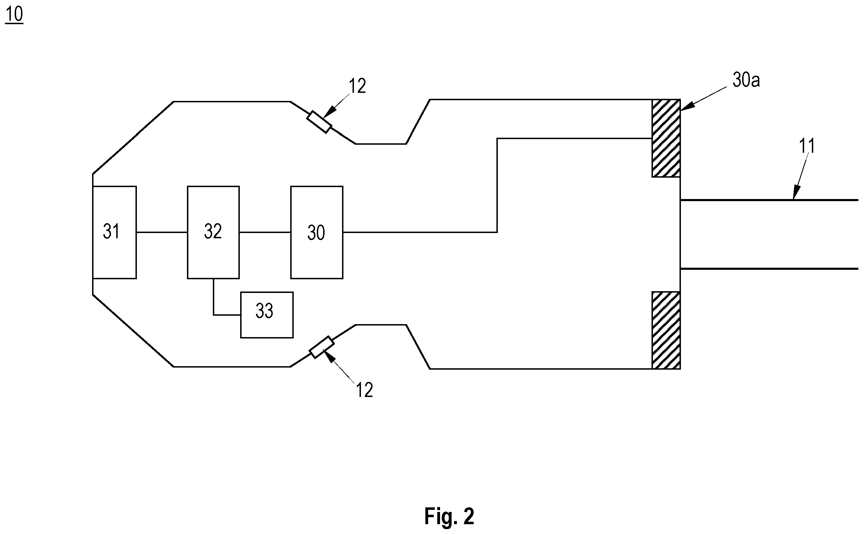

**Fig. 1** zeigt erfindungsgemäßes Kanalreinigungssystem mit einer im Kanal 1 angeordneten Spüldüse 10, wobei die Spüldüse selbst in **Fig. 2** in einer detaillierten Ansicht gezeigt ist.

Die Spüldüse 10 ist an einen Spülschlauch 11, der als Hochdruckspülschlauch ausgestaltet sein kann, gekoppelt, über den der Spüldüse ein Spülmedium, beispielsweise Wasser zugeführt wird. An der Spüldüse können mehrere Düsen 12 vorgesehen sein, die vorzugsweise radial umlaufend an der Spüldüse angeordnet sind. Diese Düsen sind mit der Spülmediumzufuhr an der Rückseite der Spüldüse verbunden. Bei der in Fig. 2 gezeigten Spüldüse 10 sind die Düsen 12 als sogenannte Rückstoßdüsen ausgestaltet, die einerseits der Reinigung des Kanals dienen und andererseits aufgrund des Rückstoßimpulses des austretenden Spülmediums eine Vorwärtsbewegung der Spüldüse bewirken. Es können noch weitere Düse oder andere Düsen an der Spüldüse angeordnet sein.

Die Spüldüse 10 weist an ihrem vorderen Ende eine Kamera 31 auf, die als Videokamera ausgestaltet sein kann. Erfindungsgemäß kann die Kamera 31 aber auch als "normale" Kamera ausgestaltet sein, mit der in regelmäßigen Abständen Bildaufnahmen erzeugt werden.

Die Spüldüse 10 ist über eine Kommunikationsverbindung 40 mit einer Empfangseinheit 22 einer Anzeigeeinheit 21 gekoppelt bzw. koppelbar, wobei die Anzeigeeinheit 21 außerhalb des Kanals, beispielsweise in einem hier nicht gezeigten Inspektionsfahrzeug, angeordnet ist. Vorzugsweise handelt es sich bei der Kommunikationsverbindung 40 um eine drahtlose Verbindung. Es kann aber auch eine drahtgebundene Kommunikationsverbindung vorgesehen sein - vorteilhafter ist jedoch eine drahtlose Kommunikationsverbindung.

Die Spüldüse weist eine Sendeeinheit 30 auf, über die Kommunikationsverbindung mit der Empfangseinheit 22 der Anzeigeeinheit 21 hergestellt wird. Bei Vorsehen einer drahtlosen Kommunikationsverbindung ist die Sendeeinheit 30 mit einer oder mehreren Sende-/Empfangsantennen 30a gekoppelt, die vorzugsweise an der Rückseite der Spüldüse angeordnet sind.

Die Anzeigeeinheit 21 kann beispielsweise ein Tablet oder ein stationärer Bildschirm sein. An der Anzeigeeinheit 21 wird der Reinigungszustand des Kanalrohres in dem Bereich, in dem sich die Spüldüse 10 befindet bzw. der von der Kamera 31 der Spüldüse 10 erfasst wird, zur Anzeige gebracht. Erfindungsgemäß ist es hierbei vorgesehen, den Reinigungszustand als eine Art Ampel 23 zu visualisieren, wobei eine grüne Ampel angibt, dass keine Verunreinigung vorliegt, eine gelbe Ampel angibt, dass eine mittlere Verunreinigung vorliegt, und eine rote Ampel angibt, dass eine starke Verunreinigung vorliegt.

Unter dem Begriff "Ampel" sind erfindungsgemäß auch andere als ampelartige Symbole zu verstehen. Wesentlich für die Erfindung ist, dass einige wenige unterschiedliche Symbole vorgesehen sind, denen jeweils ein bestimmter Reinigungszustand zugeordnet ist, und die von dem Bediener des Systems einfach zu unterscheiden und wahrzunehmen sind. Anstelle der drei Ampelfarben können beispielsweise auch die drei Ziffern 0, 1 und 2 verwendet werden, mit 0 = keine Verunreinigung, 1 = mittlere Verunreinigung und 2 = starke Verunreinigung. Anstelle von drei Stufen der Verunreinigung können auch zwei Stufen der Verunreinigung (keine Verunreinigung und Verunreinigung) oder mehr als drei Stufen der Verunreinigung vorgesehen sein.

Obwohl Bilder bzw. ein Video der Kamera 31 an der Spüldüse zur Verfügung stehen, werden erfindungsgemäß nicht die Videobilder an der Anzeigeeinheit 21 zur Anzeige gebracht, sondern die der Verunreinigung entsprechenden Ampelsymbole. Dies hat den Vorteil, dass auf die Übertragung der Videobildern verzichtet werden kann. Der Bediener muss nicht mehr die Videobilder auswerten (was ein komplexer Vorgang sein kann, und eine erhebliche Erfahrung des Bedieners voraussetzt), um zu entscheiden, ob eine Verunreinigung vorliegt, sondern muss sich lediglich auf die Ampelsymbole konzentrieren. Eine Reinigungsvorgang kann so auch von einem ungeübten Bediener effektiv und insbesondere effizient durchgeführt werden.

In Fig. 1 sind beispielhaft drei Stellen im Kanal gezeigt, die eine bzw. keine Verunreinigung zeigen:
V_{R} - starke Verunreinigung im Bereich der Spüldüse bzw. im Erfassungsbereich der Kamera: In diesem Fall würde an der Anzeigeeinheit 21 eine rote Ampel angezeigt werden.
V_{Y} - mittlere Verunreinigung im Bereich der Spüldüse bzw. im Erfassungsbereich der Kamera: In diesem Fall würde an der Anzeigeeinheit 21 eine gelbe Ampel angezeigt werden.
V_{G} - keine Verunreinigung im Bereich der Spüldüse bzw. im Erfassungsbereich der Kamera: In diesem Fall würde an der Anzeigeeinheit 21 eine grüne Ampel angezeigt werden.

Anhand der an der Anzeigeeinheit 21 angezeigten Ampel (Farbe der Ampel) kann der Bediener entscheiden, ob die Stelle, an der sich der Spülkopf 10 befindet weiter gereinigt werden muss (wenn die Ampel gelb oder rot anzeigt) oder ob die Stelle, an der sich der Spülkopf 10 befindet, ausreichend gereinigt ist (wenn die Ampel grün anzeigt) und der Spülkopf in dem Kanal weiterbewegt werden kann.

Ferner kann das System eine Steuereinrichtung 20 zum Steuern des Beaufschlagens der Spüldüse 10 mit dem Spülmedium umfassen. Diese Steuereinrichtung kann beispielsweise von dem Bediener des Systems bedient werden. Mit der Steuereinrichtung 20 kann beispielweise der Druck, mit dem das Spülmedium der Spüldüse 10 zugeführt wird, kontrolliert bzw. gesteuert werden. Die Steuereinrichtung kann auch verwendet werden, um das Aufrollen oder Abrollen des Spülschlauches 11 von einer Schlauchtrommel zu steuern.

In einer besonderen Ausgestaltung der Erfindung ist die Steuereinrichtung 20 mit der Anzeigeeinheit 21 gekoppelt, derart, dass der Steuereinrichtung 20 eine Information über den an der Anzeigeeinheit angezeigten Reinigungszustand zugeführt wird. Die Steuereinrichtung 20 kann dann angepasst sein, auch ohne manuellen Eingriff beispielweise den Druck, mit dem das Spülmedium der Spüldüse 10 zugeführt wird und/oder das Aufrollen oder Abrollen des Spülschlauches 11 von einer Schlauchtrommel zu steuern. So kann die Steuereinrichtung 20 beispielsweise angepasst sein, den Druck, mit dem das Spülmedium der Spüldüse 10 zugeführt wird, in Abhängigkeit von der Ampelampelfarbe zu steuern (z.B. den Druck zu reduzieren, wenn die Ampel grün anzeigt).

Erfindungsgemäß weist die Spüldüse eine Datenverarbeitungseinheit 32 auf, die einerseits mit der Kamera 31 und andererseits mit der Sendeeinheit 30 gekoppelt ist. Die Datenverarbeitungseinheit 32 nimmt die von der Kamera 31 aufgenommenen Bilder des Kanalrohres 1 (z.B. ein Videosignal bzw. Videobilder) entgegen. Die entgegengenommenen Bilder werden von der Datenverarbeitungseinheit 32 analysieren, um einen Reinigungszustand des Kanalrohres 1 zu ermitteln. Basierend auf dem ermittelten Reinigungszustand erzeugt die Datenverarbeitungseinheit ein Signal und sendet dieses über die Sendeeinheit 30 an die Empfangseinheit 22 der Anzeigeeinheit 21. Das von der Datenverarbeitungseinheit erzeugte Signal ist hierbei indikativ für den ermittelten Reinigungszustand, d.h. das Signal enthält eine Information über den Reinigungszustand des Kanalabschnittes, in dem sich der Spülkopf befindet bzw. der von der Kamera erfasst wird. Basierend auf diesem Signal wird die Anzeigeeinheit veranlasst den Reinigungszustand zu visualisieren, z.B. in Form einer Ampel. Mit anderen Worten wird mit dem Signal, das von der Datenverarbeitungseinheit erzeugt wird und an die Anzeigeeinheit übertragen wird, die Ampel an der Anzeigeeinheit gesteuert. Wird nur zwischen "verunreinigt" und "nicht verunreinigt" unterschieden, reicht ein Bit als Informationsträger in dem Signal aus.

Die Analyse der von der Datenverarbeitungseinheit 32 entgegengenommenen Bilder kann mit Hilfe von an sich bekannten Bild- bzw. Mustererkennungsverfahren bewerkstelligt werden. Vorteilhaft kann es aber sein, wenn die Datenverarbeitungseinheit 32 eine künstliche Intelligenz, insbesondere ein künstliches neuronales Netz, umfasst, das angelernt ist, in den entgegengenommenen Bildern den Reinigungszustand bzw. den Grad der Verunreinigung des Kanalrohres 1 zu erkennen. Das künstliche neuronale Netz wird hierzu mit Trainingsdaten, die Aufnahmen von einer Vielzahl von verschiedenen Kanalrohrabschnitten mit verschiedenen Reinigungszuständen umfassen, trainiert bzw. angelernt.

Das künstliche neuronale Netz kann auch dahingehend trainiert werden, Artefakte in den aufgenommenen Bilddaten, die keine Verunreinigung sind, als solche zu erkennen. Beispielweise handelt es sich bei einem radial umlaufenden Wulst an einer Verbindungsstelle zweier Rohre nicht um eine Verunreinigung, sondern um eine Abdichtung. Das künstliche neuronale Netz erkennt dann, dass es sich um keine Verunreinigung handelt. Entsprechend wird dann von der Datenverarbeitungseinheit kein für eine Verunreinigung indikatives Signal erzeugt bzw. ein Signal erzeugt, das indikativ für "keine Verunreinigung" ist. Ein weiteres Beispiel hierfür wäre in der Kanalsohle stehendes Wasser.

Die Datenverarbeitungseinheit 32 kann mit einer Speichereinrichtung 33 gekoppelt sein, die ebenfalls in der Spüldüse angeordnet ist. Die von der Kamera aufgenommenen Bilder bzw. Videobilder können in der Speichereinrichtung 33 gespeichert werden. Nach Abschluss des Spülvorganges können die Speichereinrichtung 33 gespeicherten Bilddaten beispielsweise zu Dokumentationszwecken ausgelesen werden. Die in der Speichereinrichtung 33 gespeicherten Bilddaten können aber auch verwendet werden, um das künstliche neuronale Netz weiter zu trainieren und damit die Qualität der automatischen Erkennung von Verunreinigungen zu verbessern.

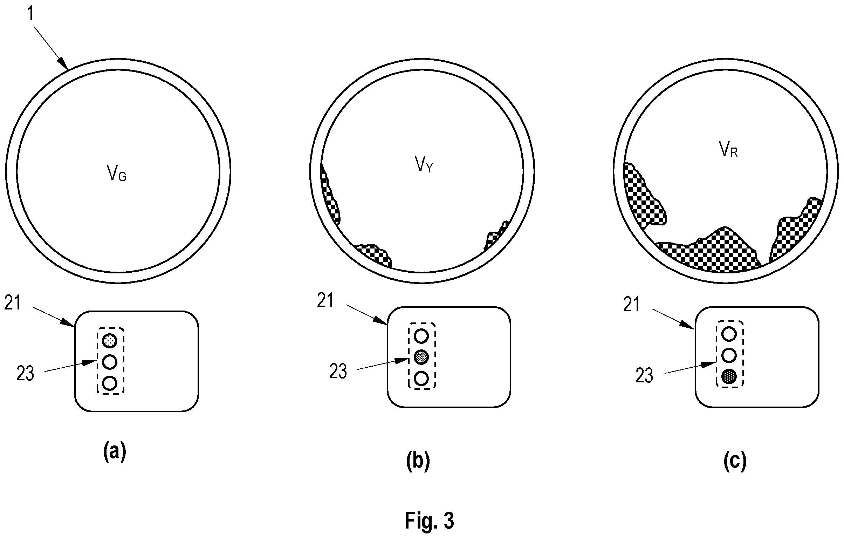

**Fig. 3** zeigt drei Beispiele von Reinigungszuständen während eines Spülvorganges mit dazugehörigen Ampeln, die an einer Anzeigeeinheit angezeigt werden. In Abbildung (a) der Fig. 3 ist eine sauberer Kanalabschnitt V_{G} gezeigt. Dementsprechend wird an der Anzeigeeinheit 21 eine grüne Ampel 23 angezeigt. In Abbildung(b) ist eine mittelmäßig verunreinigter Kanalabschnitt V_{Y} gezeigt, sodass an der Anzeigeeinheit 21 eine gelbe Ampel 23 angezeigt wird. In Abbildung (c) ist schließlich ein stark verunreinigter Kanalabschnitt V_{R} gezeigt, sodass an der Anzeigeeinheit 21 eine rote Ampel 23 angezeigt wird. Bei diesem Beispiel wird an der Anzeigeeinheit 21 ein an sich bekanntes Ampelsymbol mit den drei Farben rot, gelb und grün angezeigt.

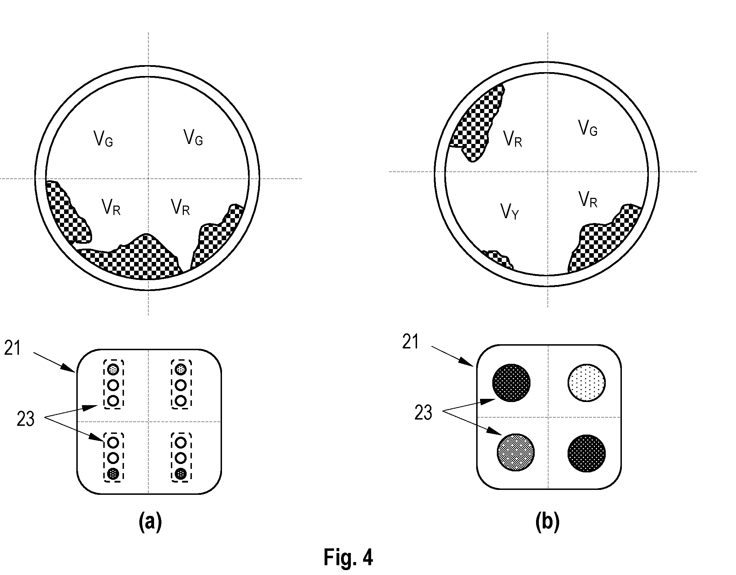

**Fig. 4** zeigt zwei weitere Beispiele von Reinigungszuständen während eines Spülvorganges mit einer alternativen Anzeige dazugehöriger Ampeln, die an einer Anzeigeeinheit angezeigt werden.

Das künstliche neuronale Netz ist hierbei darauf trainiert worden nicht nur eine Verunreinigung bzw. einen Grad der Verunreinigung in den aufgenommenen Bildern zu erkennen, sondern auch, in welchem Quadranten des Bildes sich welche Verunreinigung befindet. Das kann dann vorteilhaft sein, wenn mit der Spüldüse der Wasserstrahl in eine bestimmte Richtung ausgerichtet werden kann.

In Abbildung (a) der Fig. 4 ist der Abschnitt des Kanalrohres in den beiden unteren Quadranten stark verunreinigt, während das Kanalrohr in den beiden ober Quadranten sauber ist. Die Datenverarbeitungseinheit kann hier angepasst sein, für jeden Quadranten ein entsprechendes Signal bzw. Daten zu erzeugen und diese dann an die Anzeigeeinheit zu übertragen. Im Beispiel der Abbildung (a) würden die Daten eine Information darüber umfassen, dass die beiden unteren Quadranten stark verunreinigt und die beiden oberen Quadranten sauber sind. An der Anzeigeeinheit 21 kann dann für jeden Quadranten eine separate Ampel angezeigt werden, die entsprechend den Quadranten an der Anzeigeeinheit platziert sind. Links unten und rechts unten wird daher eine rote Ampel angezeigt, während links oben und rechts oben eine grüne Ampel angezeigt wird. Der Bediener kann so gezielt eine Reinigung der unteren Rohrhälfte veranlassen (sofern die Spüldüse hierfür geeignet ist).

In Abbildung (b) der Fig. 4 ist der Abschnitt des Kanalrohres in den Quadranten links oben und rechts unten stark verunreinigt. Der Quadrant links unten ist mittelmäßig verunreinigt und der Quadrant rechts oben ist nicht verunreinigt. An der Anzeigeeinheit 21 kann dann für jeden Quadranten ein entsprechendes Symbol angezeigt werden, das entsprechend den Quadranten an der Anzeigeeinheit platziert sind. In diesem Beispiel sind keine Ampelsymbole vorgesehen, sondern farbige Punkte bzw. Fläche. Links oben und rechts unten wird daher jeweils ein roter ausgefüllter Kreis angezeigt, links unten wird ein gelb ausgefüllter Kreis angezeigt und rechts oben wird ein grün ausgefüllter Kreis angezeigt. Der Bediener kann auch hier gezielt eine Reinigung der jeweiligen Bereiche veranlassen (sofern die Spüldüse hierfür geeignet ist).

Mit der Erfindung kann ein Spülvorgang erheblich vereinfacht und beschleunigt werden. Fehler aufgrund von Fehlinterpretationen aufgenommener Bilder durch den Bediener werden vermieden, da Basis dafür, ob ein Kanalabschnitt gereinigt bzw. weiter gereinigt werden muss einfache graphische Symbole, etwa ein Ampelsymbol, sind. Der Verbrauch von Spülwasser kann reduziert werden, da nur mehr dort gereinigt wird, wo die Ampel auf rot oder gelb steht. Für Abschnitte, wo die Ampel auf grün steht, kann die Zufuhr von Spülwasser zur Spüldüse gegebenenfalls komplett getoppt werden.

### Bezugszeichenliste:

- 1: Kanalrohr bzw. Kanal
- 10: Spüldüse
- 11: Spülschlauch
- 12: Düsen der Spüldüse
- 20: Steuereinrichtung
- 21: Anzeigeeinheit
- 22: Empfangseinheit der Anzeigeeinheit 21
- 23: Ampel
- 30: Sendeeinheit der Spüldüse 10
- 30a: Sende-/Empfangsantennen der Sendeeinheit 30
- 31: Kamera der Spüldüse 10
- 32: Datenverarbeitungseinheit der Spüldüse 10
- 33: Speichereinrichtung der Spüldüse 10
- 40: Kommunikationsverbindung
- V_{G}: keine Verunreinigung (grün)
- V_{R}: starke Verunreinigung (rot)
- V_{Y}: mittlere Verunreinigung (gelb)

## Patentansprüche

1. Kanalreinigungssystem, umfassend
- eine in einem Kanalrohr (1) verfahrbare oder verschiebbare Spüldüse (10), die mit einem Spülschlauch (11) gekoppelt ist, wobei die Spüldüse (10) ausgestaltet ist eine Reinigung des Kanalrohres (1) durchzuführen, wenn die Spüldüse (10) über den Spülschlauch (11) mit einem Spülmedium beaufschlagt wird, und
- eine Anzeigeeinheit (21) mit einer Empfangseinheit (22),
wobei
- die Spüldüse (10) eine Sendeeinheit (30), eine Kamera (31) und eine Datenverarbeitungseinheit (32) umfasst,
- die Datenverarbeitungseinheit (32) mit der Kamera (31) und mit der Sendeeinheit (30) gekoppelt ist,
- die Sendeeinheit (30) angepasst ist, eine Kommunikationsverbindung (40) mit der Empfangseinheit (22) der Anzeigeeinheit (21) herzustellen,
- die Datenverarbeitungseinheit (32) angepasst ist
- von der Kamera (31) aufgenommene Bilder des Kanalrohres (1) entgegenzunehmen,
- die entgegengenommenen Bilder zu analysieren, um einen Reinigungszustand des Kanalrohres (1) zu ermitteln, und
- basierend auf dem ermittelten Reinigungszustand ein Signal zu erzeugen und über die Sendeeinheit (30) an die Empfangseinheit (22) der Anzeigeeinheit (21) zu übertragen, wobei das Signal indikativ für den ermittelten Reinigungszustand ist, und
- die Anzeigeeinheit (21) angepasst ist basierend auf dem von der Empfangseinheit (22) empfangenen Signal eine Visualisierung des empfangenen Signals an der Anzeigeeinheit (21) zu veranlassen, wobei die Visualisierung des Signals den Reinigungszustand des Kanalrohres angibt.

2. Kanalreinigungssystem nach dem vorhergehenden Anspruch, weiter umfassend eine Steuereinrichtung (20) zum Steuern des Beaufschlagens der Spüldüse (10) mit dem Spülmedium.

3. Kanalreinigungssystem nach einem der vorhergehenden Ansprüche, wobei die Datenverarbeitungseinheit (32) eine künstliche Intelligenz, insbesondere ein künstliches neuronales Netz, umfasst, wobei die künstliche Intelligenz angelernt ist, in den entgegengenommenen Bildern den Reinigungszustand des Kanalrohres (1) zu erkennen.

4. Kanalreinigungssystem nach einem der vorhergehenden Ansprüche, wobei die Kamera (31) eine Videokamera ist.

5. Kanalreinigungssystem nach einem der vorhergehenden Ansprüche, wobei die Kommunikationsverbindung (40) eine drahtlose Kommunikationsverbindung ist.

6. Kanalreinigungssystem nach einem der vorhergehenden Ansprüche, wobei der Reinigungszustand zwei Reinigungszustände, vorzugsweise drei Reinigungszustände umfasst, wobei das Signal indikativ für einen der beiden Reinigungszustände, vorzugsweise für einen der drei Reinigungszustände ist.

7. Kanalreinigungssystem nach einem der vorhergehenden Ansprüche, wobei die Visualisierung des empfangenen Signals an der Anzeigeeinheit (21) ein Anzeigen einer Ampel an der Anzeigeeinheit umfasst, wobei jede Ampelfarbe einem Reinigungszustand zugeordnet ist.

8. Kanalreinigungssystem nach einem der vorhergehenden Ansprüche 2 bis 7, wobei die Steuereinrichtung (20) angepasst ist, das Beaufschlagen der Spüldüse (10) mit dem Spülmedium in Abhängigkeit von dem erzeugten Signal zu steuern.

9. Kanalreinigungssystem nach einem der vorhergehenden Ansprüche, wobei die Spüldüse (10) ferner eine Speichereinrichtung (33) umfasst, die mit der Datenverarbeitungseinheit (32) gekoppelt ist, wobei in der Speichereinrichtung (33) die entgegengenommenen Bilder gespeichert werden.

10. Verfahren zum Steuern einer in einem Kanalrohr (1) verfahrbare oder verschiebbare Spüldüse (10), wobei die Spüldüse (10) eine Sendeeinheit (30), eine Kamera (31) und eine Datenverarbeitungseinheit (32) umfasst, wobei
- die Kamera Bilder des Kanalrohres (1) aufnimmt,
- die Datenverarbeitungseinheit (32)
- die von der Kamera aufgenommenen Bilder entgegennimmt,
- die entgegengenommenen Bilder analysiert, um einen Reinigungszustand des Kanalrohres (1) zu ermitteln,
- basierend auf dem ermittelten Reinigungszustand ein Signal erzeugt und über die Sendeeinheit (30) an eine Empfangseinheit (22) überträgt, wobei das Signal indikativ für den ermittelten Reinigungszustand ist, und
- in Abhängigkeit von dem an der Empfangseinheit (22) empfangenen Signal die Spüldüse gesteuert wird.

11. Verfahren nach dem vorhergehenden Anspruch, wobei basierend auf dem von der Empfangseinheit (22) empfangenen Signal eine Visualisierung des empfangenen Signals an einer Anzeigeeinheit (21) angezeigt wird, wobei die Visualisierung des Signals den Reinigungszustand des Kanalrohres angibt, wobei das Steuern der Spüldüse in Abhängigkeit von dem an der Empfangseinheit empfangenen Signal ein Steuern der Spüldüse in Abhängigkeit von der an der Anzeigeeinheit angezeigten Visualisierung umfasst.

12. Verfahren nach einem der vorhergehenden Ansprüche 10 oder 11, wobei die Datenverarbeitungseinheit (32) eine künstliche Intelligenz, insbesondere ein künstliches neuronales Netz, umfasst, wobei die künstliche Intelligenz angelernt ist, in den entgegengenommenen Bildern den Reinigungszustand des Kanalrohres (1) zu erkennen.

13. Verfahren nach einem der vorhergehenden Ansprüche 11 oder 12, wobei der Reinigungszustand zwei Reinigungszustände, vorzugsweise drei Reinigungszustände umfasst, wobei das Signal indikativ für einen der beiden Reinigungszustände, vorzugsweise für einen der drei Reinigungszustände ist, und wobei beim Visualisieren des empfangenen Signals an der Anzeigeeinheit (21) eine Ampel an der Anzeigeeinheit angezeigt wird, wobei jede Ampelfarbe einem Reinigungszustand zugeordnet ist.

14. Verfahren nach einem der vorhergehenden Ansprüche 10 bis 13, wobei mittels einer Steuereinrichtung (20) das Beaufschlagen der Spüldüse (10) mit einem Spülmedium gesteuert wird, insbesondere in Abhängigkeit von dem erzeugten Signal.

15. Verfahren nach einem der vorhergehenden Ansprüche 10 bis 14, wobei die Spüldüse (10) ferner eine Speichereinrichtung (33) umfasst, die mit der Datenverarbeitungseinheit (32) gekoppelt ist, wobei in der Speichereinrichtung (33) die entgegengenommenen Bilder gespeichert werden.
